# EUROPEAN PATENT SPECIFICATION

(11) **EP 0 423 112 B1**
(45) Date of publication and mention of the grant of the patent: **19.04.1995**
(21) Application number: 88905950.7
(22) Date of filing: 06.07.1988
(51) Int. Cl.: G02B 21/00, G02B 26/10

(54) **ACHROMATIC SCANNING SYSTEM**
ACHROMATISCHES ABTASTSYSTEM
SYSTEME DE BALAYAGE ACHROMATIQUE

(43) Date of publication of application: 24.04.1991
(73) Proprietor: MEDICAL RESEARCH COUNCIL, Cambridge CB2 2HQ (GB)
(72) Inventor: AMOS, William, B., Cambridge CB1 4UT (GB)
(74) Representative: Harrison, David Christopher
(86) International application number: GB8800530
(87) International publication number: WO9000755

(56) References cited:
- DE-A- 3 215 564
- GB-A- 2 184 321
- US-A- 4 745 270

## Description

The invention relates to optical scanning systems, particularly of the type suitable for use in confocal scanning microscopes.

GB-A-2,184,321 discloses a confocal scanning microscope having a scanning system that imparts a two-dimensional transverse deflection to a laser beam. The scanning system utilizes a rotating polygon mirror to effect line scanning and a galvanometer-driven mirror to effect frame scanning. The scanned beam is passed through a microscope eyepiece and objective and is focused on a sample. Fluorescent light emitted by the sample is returned along most of the same beam path (thereby being de-scanned) and is directed to a detector by a suitable beam splitter. Optical telescopes are used for optical coupling along the optical path of the incident and return beams.

US-A-3,669,522 discloses a catoptric system for relaying a beam of light to achieve two dimensional scanning of a beam. The optical elements comprise two spherical mirrors which are oriented confocally, plus an x-axis scanner or deflector and a y-axis scanner deflector. Scan line curvature is corrected for by providing an electrical feedback compensation to the mirror deflection means. DE-A-3,215,564 describes a device for image field scanning in which a rotating multifaceted mirror deflects light through the first optical element to a reflecting means which light is then reflected back to the first reflecting means. This light is passed through the second reflecting means to a rotating mirror to provide light deflection. Finally, US-A-4,745,270 provides a scanning system in which a pair of opposing galvanometric mirrors are disposed to provide scanning. Optical elements are disposed between the scanning mirrors.

The prior art system of GB-A-2184321 works well, but the optical quality of the telescopes must be high. Moreover, the system is not achromatic and does not necessarily perform well at all wavelengths.

The present invention provides an achromatic scanning system characterized by extreme simplicity and high performance.

In contrast to the arrangement disclosed in US-A-3669522 there is provided a scanning assembly as specified in the characterizing portion of claim 1.

Angular displacement of the first deflecting mirror about its axis provides scanning in one direction. The beam is then transferred by the concave mirrors to the second deflecting mirror, and impinges on the second deflecting mirror at a point on its axis of rotation. This point remains essentially stationary, regardless of the angular displacement of the first deflecting mirror. The direction of the beam at this point does, however, depend on the first deflecting mirror's angular displacement. Angular displacement of the second deflecting mirror about its axis provides scanning in the second direction. The outgoing beam may be coupled to a microscope eyepiece or the like by locating the eyepiece with its exit pupil at the stationary point on the second deflecting mirror.

A further understanding of the nature and advantages of the present invention can be realized by reference to the remaining portions of the specification and the attached drawings.
In the drawings:
Fig. 1 is a pictorial optical schematic of a confocal microscope incorporating the scanning optics assembly of the present invention; and
Fig. 2 is a plan optical schematic of the scanning assembly.

### DESCRIPTION OF THE PREFERRED EMBODIMENT

The present invention is drawn to a scanning optics assembly that subjects an incoming beam of light to an angular deflection in two orthogonal directions. While the invention is well suited to a number of applications, it will be described in connection with a confocal scanning microscope.

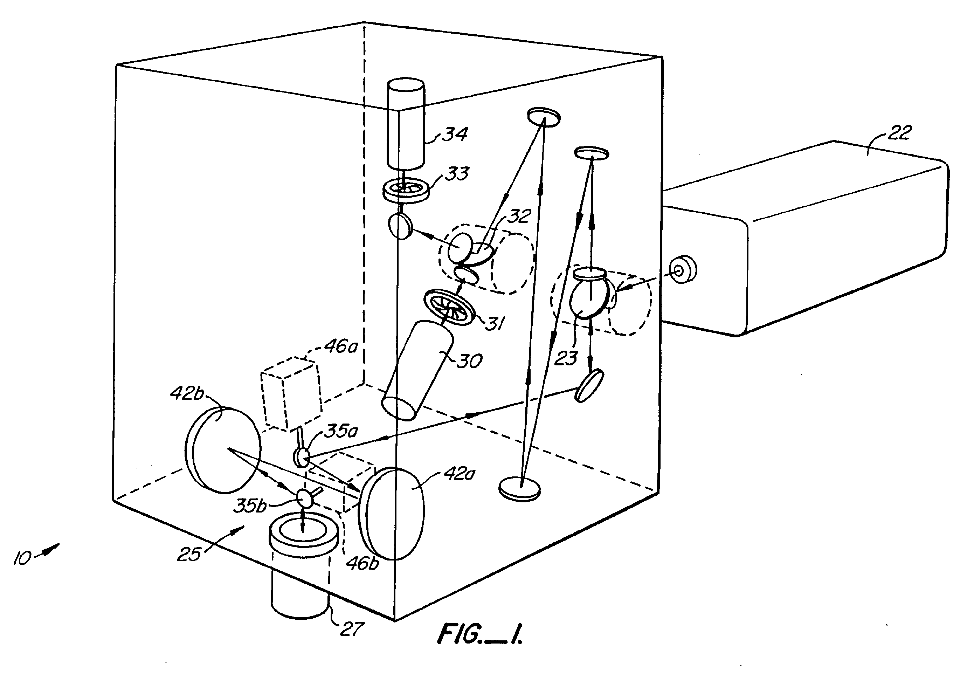

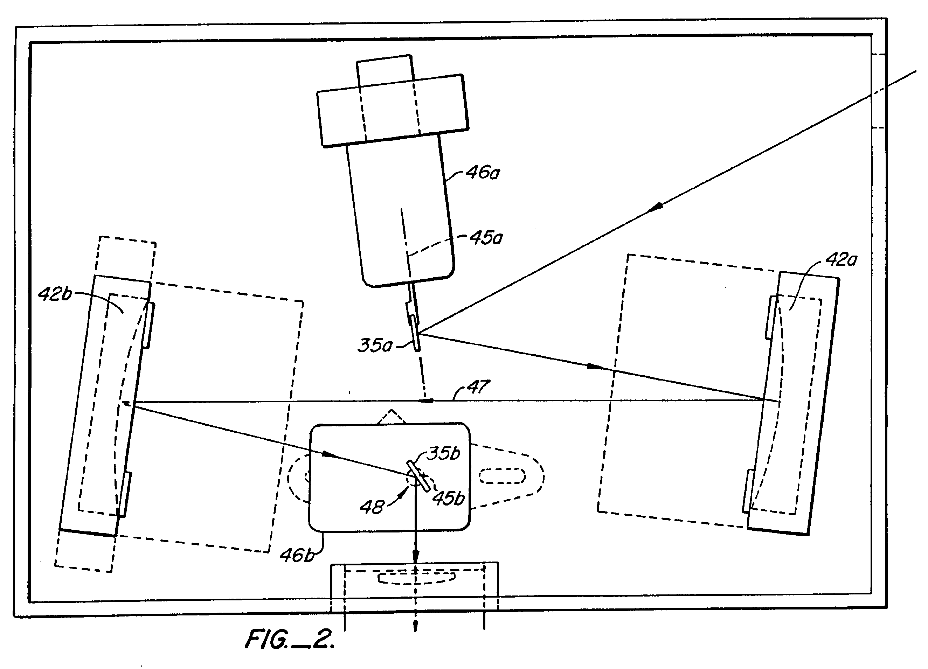

Fig. 1 is a pictorial optical schematic of a confocal microscope 10 incorporating the scanning optics assembly according to the present invention. Fig. 2 is a plan schematic of the scanning optics assembly. Specific dimensions are not part of the invention, but they will be indicated for illustrative purposes.

A light source 22 such as an argon ion laser emits a beam that encounters an optical train comprising a beam splitter 23, a scanning optics assembly 25, an eyepiece 27, and an objective (not shown). The objective focuses the beam to form the spot on the sample. Light emanating from the sample in the region of the spot passes along the same path (but in the reverse direction) as the incoming laser light until it reaches beam splitter 23, at which point it encounters an additional beam splitter 32. Light in one path is directed to a photomultiplier tube 30, in front of which is disposed an iris diaphragm 31 (variable 0.7-7.0 mm). Light in the other path is directed to a second iris diaphragm 33 and photomultiplier tube 34.

In the preferred embodiment, scanning optics assembly 25 comprises first and second plane mirrors 35a and 35b and an afocal assembly, located optically therebetween, comprising first and second concave mirrors 42a and 42b. The mirrors are disposed so that the incoming beam is subjected to four successive reflections, namely from mirrors 35a, 42a, 42b, and 35b, as will be explained in detail below.

Plane mirror 35a is normally disposed at an angle to the direction of the incoming beam and is rotatable about an axis 45a. Axis 45a lies in the plane of the reflective surface of plane mirror 35a and in the plane of Fig. 2. Thus, rotation of mirror 35a about axis 45a causes an angular deflection of the beam into and out of the plane of Fig. 2. Plane mirror 35b is normally disposed at an angle to the direction of the outgoing beam and is rotatable about an axis 45b. Axis 45b lies in the plane of the reflective surface of plane mirror 35b and is perpendicular to the plane of Fig. 2. Thus rotation of mirror 35b about axis 45b causes an angular deflection of the beam in the plane of Fig. 2. Plane mirrors 35a and 35b are driven by respective galvanometers 46a and 46b (shown in phantom) suitable for imparting angular displacements of about ± 17.5° at the line and frame rates of 525 sec⁻¹ and 1 sec⁻¹. It has been found that the curvature of the scan lines can be minimized in a configuration where the two plane mirrors have mean (undeflected) orientations that are not parallel to one another.

Concave mirrors 42a and 42b face each other and function as a telescope for transferring the beam from plane mirror 35a to plane mirror 35b and thence to eyepiece 27. The concave mirrors may be spherical, paraboloidal, or of another form. In the illustrative embodiment, the focal lengths are 75 mm. There is no absolute requirement that the focal lengths of the two mirrors be equal, and indeed the use of different focal lengths provides degrees of freedom over the basic scan angles and the width of the beam at the eyepiece. Since the scanned beam only traces a narrow strip on each of the concave mirrors, the concave mirrors need not be circular in outline, but rather can be in the form of strips (length about 50 mm).

During operation of the microscope, the laser beam, which is collimated (or nearly so), falls sequentially on plane mirror 35a, concave mirror 42a, concave mirror 42b, and plane mirror 35b. The light reflected from concave mirror 42a is focused at an intermediate point, denoted 47, whose location varies as the scan angle of mirror 35a varies. The light then emerges from point 47 whereupon concave mirror 42b restores the beam to its collimated state and redirects it to plane mirror 35b where it reflects from a stationary region 48 along axis of rotation 45b. Thus, the beam has been deflected in two directions and the afocal assembly has operated to transfer the beam from the first deflecting element to the second deflecting element. The scanning optics assembly is located so that the exit pupil of microscope eyepiece 27 falls on the area of plane mirror 35b near axis 45b. In this way, the collimated beam emergent from the scanning assembly is coupled to eyepiece 27 and thence to the objective, which focuses the beam to a small spot.

The fact that the scanned beam emerges from stationary region 48 on plane mirror 35b makes the scanning assembly well suited to any kind of imaging that can be done through an eyepiece (e.g., endoscopy, ophthalmoscopy, telescopic observation) or that must be done through a small aperture.

While the above is a complete description of the preferred embodiment of the invention, various modifications, alternative constructions, and equivalents may be used. For example, while the preferred embodiment uses plane scanning mirrors, there may be some applications where optical power in one or both is advantageous. Therefore, the above description should not be taken as the scope of the invention which is defined by the appended claims.

## Claims

1. A scanning assembly for imparting a two-dimensional transverse deflection to an incoming beam of light, comprising:
first and second deflecting means (35a,35b) for deflecting the beam along respective first and second non-parallel directions,
first and second facing concave mirrors (42a,42b) disposed relative to said first and second deflecting means (35a,35b) so as to form an afocal assembly such that the incoming beam is reflected by said first deflecting means (35a), said first concave mirror (42a), said second concave mirror (42b), and said second deflecting means (35b) in that order, characterized in that
the first and second deflecting means are oscillating planar mirrors oscillatable about respective axes (45a,45b) in the respective planes of the mirrors, the axes being non-parallel and being so arranged with respect to the concave mirrors that, for an incoming beam incident on the first planar mirror at an angle to the plane normal to its axis of oscillation, curvature of the scan lines is minimized.

2. The scanning assembly of claim 1 wherein said planar mirrors (35a,35b) face away from each other.

3. The scanning assembly of claim 1 or claim 2 wherein said first and second axes are perpendicular to each other.

4. The scanning assembly of any of claims 1 to 3 wherein said first and second concave mirrors (42a,42b) are characterised by respective focal lengths that are equal.

5. The scanning assembly of any of claims 1 to 4 wherein said concave mirrors (42a,42b) are disposed so that a collimated incoming beam results in a collimated outgoing beam.

## Patentansprüche

1. Abtastanordnung, um einem hereinkommenden Lichtstrahl eine zweidimensionale transversale Ablenkung zu geben, umfassend:
erste und zweite Ablenkmittel (35a,35b), um den Strahl entlang jeweiliger bzw. respektiver erster und zweiter nichtparalleler Richtungen abzulenken,
erste und zweite einander gegenüberstehende konkave Spiegel (42a,42b), die relativ zu den ersten und zweiten Ablenkmitteln (35a,35b) angeordnet sind, um eine brennpunktlose Anordnung zu bilden, so daß der hereinkommende Strahl durch das erste Ablenkmittel (35a), den ersten konkaven Spiegel (42a), den zweiten konkaven Spiegel (42b) und das zweite Ablenkmittel (35b) in dieser Reihenfolge reflektiert wird, dadurch gekennzeichnet, daß
die ersten und zweiten Ablenkmittel oszillierende ebene Spiegel sind, die um jeweilige bzw. respektive Achsen (45a,45b) in den jeweiligen bzw. respektiven Spiegelebenen schwingbar bzw. oszillierbar sind, wobei die Achsen nichtparallel und bezüglich der konkaven Spiegel so angeordnet sind, daß für einen hereinkommenden Strahl, der auf den ersten ebenen Spiegel in einem Winkel zur Ebene auftrifft, die normal zu seiner Schwingungs- bzw. Oszillierachse steht, die Krümmung der Abtastlinien minimiert wird.

2. Abtastanordnung nach Anspruch 1, worin die ebenen Spiegel (35a,35b) voneinander abgewandt sind.

3. Abtastanordnung nach Anspruch 1 oder 2, worin die erste und zweite Achse rechtwinkelig zueinander sind.

4. Abtastanordnung nach einem der Ansprüche 1 bis 3, worin die ersten und zweiten konkaven Spiegel (42a, 42b) durch jeweils gleiche Brennweiten gekennzeichnet sind.

5. Abtastanordnung nach einem der Ansprüche 1 bis 4, worin die konkaven Spiegel (42a,42b) so angeordnet sind, daß ein parallel ausgerichteter hereinkommender Strahl zu einem parallel ausgerichteten Ausgangsstrahl führt.

## Revendications

1. Système de balayage pour impartir une déviation transversale bidimensionnelle à un faisceau de lumière entrant, comprenant :
des premier et deuxième moyens de déviation (35a, 35b) pour dévier le faisceau le long de première et deuxième directions respectives non parallèles,
des premier et deuxième miroirs concaves (42a, 42b) qui se font face disposés relativement auxdits premier et deuxième moyens de déviation (35a, 35b) de façon à former un ensemble afocal de sorte que le faisceau entrant soit réfléchi par ledit premier moyen de déviation (35a), ledit premier miroir concave (42a), ledit deuxième miroir concave (42b) et ledit deuxième moyen de déviation (35b) dans cet ordre, caractérisé en ce que les premier et deuxième moyens de déviation sont des miroirs plans oscillants pouvant osciller autour d'axes respectifs (45a, 45b) dans les plans respectifs des miroirs, les axes étant non-parallèles et étant disposés par rapport aux miroirs concaves de façon que pour un faisceau entrant incidant sur le premier miroir plan suivant un angle au plan perpendiculaire à son axe d'oscillation, la courbure des lignes de balayage soit minimisée.

2. Système de balayage selon la revendication 1, dans lequel lesdits miroirs plans (35a, 35b) sont éloignés l'un de l'autre.

3. Ensemble de balayage selon la revendication 1 ou la revendication 2, dans lequel lesdits premier et deuxième axes sont perpendiculaires l'un à l'autre.

4. Ensemble de balayage selon l'une des revendications 1 à 3, dans lequel lesdits premier et deuxième miroirs concaves (42a, 42b) sont caractérisés par des longueurs focales respectives qui sont égales.

5. Système de balayage selon l'une des revendications 1 à 4, dans lequel lesdits miroirs concaves (42a, 42b) sont disposés de façon qu'un faisceau entrant collimaté se traduit par un faisceau sortant collimaté.
